# EUROPEAN PATENT SPECIFICATION

(11) **EP 4 492 834 B1**
(45) Date of publication and mention of the grant of the patent: **11.11.2026**
(21) Application number: 23184982.9
(22) Date of filing: 12.07.2023
(51) Int. Cl.: H04W 84/18, H04W 4/80, H04W 52/02

(54) **AUTOMATIC ISOCHRONOUS ADAPTION LAYER MODE SWITCHING**
AUTOMATISCHE ISOCHRONE ADAPTIONSSCHICHTMODUSUMSCHALTUNG
COMMUTATION AUTOMATIQUE DE MODE DE COUCHE D'ADAPTATION ISOCHRONE

(43) Date of publication of application: 15.01.2025
(73) Proprietor: Intel Corporation, Santa Clara, CA 95054 (US)
(72) Inventor: HALAPPA, Mohan Kumar, Bangalore (IN); HAGGAI, Oren, 4439211 Kefar Sava (IL); KROVVIDI, Srinivas, 500090 Hyderabad (IN)
(74) Representative: Viering, Jentschura & Partner mbB Patent- und Rechtsanwälte

(56) References cited:
- WO-A1-2023/027407
- CN-A- 116 233 812
- WOOLLEY MARTIN: "Bluetooth Core Specification Version 5.2 Feature Overview", 9 December 2020 (2020-12-09), XP093004072, Retrieved from the Internet <URL:https://www.bluetooth.com/wp-content/uploads/2020/01/Bluetooth_5.2_Feature_Overview.pdf> [retrieved on 20221201]

## Description

### Technical Field

This disclosure relates generally to wireless communication systems, and in particular, to streaming audio over wireless communications systems such as Bluetooth that may utilize, for example, an isochronous adaptation layer.

### Background

In wireless audio streaming, such as with Bluetooth low energy (LE), a user may connect a listening device (such as a hearing aid, headphones, a speaker, a headset, etc.) via a Bluetooth LE connection to a host device (such as a computer, laptop, smartphone, etc.) in order to stream music and/or make voice calls while using the listening device for audio. In such a case, the Bluetooth LE specification defines different types of audio streaming configurations that depend on whether other devices are present in the audio source's piconet (e.g., a group of devices (CIG) that share the same channel to the host).

When no other devices are connected in the same group, the audio stream communication configuration with the listening device may use an "unframed" communication mode. In unframed communication mode, audio service data unit (SDU) frames are received at 10 millisecond (ms) intervals and sent to the listening device at an isochronous (ISO) interval of 10 ms (e.g., defined at the ISO adaptation layer, ISOAL). To the extent other devices (e.g., a Bluetooth keyboard and/or mouse) are connected to the computer/laptop in the same group as the listening device, the audio stream configuration for the listening device may use an "unsegmented framed" mode (also called "framed, unsegmented mode"), where SDU frames received at 10 ms are sent to the listening devices at a 7.5 ms ISO interval, without any SDU segmentation.

When an audio stream is operating in unsegmented framed mode, this may add an extra 5 bytes of data that may need to be transmitted by the source (e.g., the computer/laptop) and received by the listening device in order to comply with the 7.5 ms interval. This may cause unnecessary power consumption by both the listening device and the computer/laptop.

Various examples are disclosed in WO 2023/027407 A1.

### Summary of the Disclosure

The invention is set out in the appended set of claims.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows an exemplary flow diagram of source data unit (SDU) and protocol data unit (PDU) as between a source device/host and a listening device that automatically switches a mode of the isochronous adaptation layer;
FIG. 2 shows an example flow chart of a listening device's audio connection establishment and automatic mode switching based on the change of state of another Bluetooth-connected device;
FIG. 3 depicts a schematic flow diagram of a method for automatically switching a mode of the isochronous adaptation layer.

### Description

The following detailed description refers to the accompanying drawings that show, by way of illustration, exemplary details and features.

The word "exemplary" is used herein to mean "serving as an example, instance, or illustration." Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (*e.g.,* one, two, three, four, [...], etc.). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in the form of a pointer. The term "data", however, is not limited to the aforementioned examples and may take various forms and represent any information as understood in the art.

The terms "processor" or "controller" as, for example, used herein may be understood as any kind of technological entity (e.g., hardware, software, and/or a combination of both) that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, software, firmware, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g*., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g*., the transmission of radio signals) and logical transmission (*e.g*., the transmission of digital data over a logical software-level connection). For example, a processor or controller may transmit or receive data over a software-level connection with another processor or controller in the form of radio signals, where the physical transmission and reception is handled by radio-layer components such as radio frequency (RF) transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both "direct" calculations via a mathematical expression/formula/relationship and 'indirect' calculations via lookup or hash tables and other array indexing or searching operations.

Details of the Bluetooth low energy (LE) standard, and more particularly, the ISO adaptation layer (ISOAL), may be found in the Bluetooth standard. *See, e.g.,* Bluetooth Core Specification, v. 5.2 (Dec. 31, 2019) (see Volume 6, Part G for a discussion of the ISOAL). As should be understood from the description below, the automatic mode switching discussed herein is not limited to this particular version of Bluetooth, and the automatic mode switching may be applied to any future version of the Bluetooth standard.

As noted above, when using a Bluetooth low energy connection to stream audio data to connected audio devices, the communication connection may be set up as an "unframed" communication mode or "framed" communication mode. In unframed communication mode, audio service data unit (SDU) frames may be received at 10 millisecond (ms) intervals and sent to the listening device at an isochronous (ISO) interval of 10 ms. In a framed, unsegmented communication mode, SDU frames may be received at 10 millisecond (ms) intervals and sent to the listening device at an ISO interval of 7 ms.

When there are other device connected to the host via a Bluetooth LE communication protocol (e.g., a Bluetooth LE keyboard and/or mouse) in the same group as a listening device, the audio stream configuration for the listening device may be required to match the connection interval of other device(s) (e.g., a connection interval of 7.5 ms) in the group even though the SDU frames with the audio stream are received at 10 ms. The is because, for example, groups of Bluetooth LE devices would typically communicate with the same connection interval. This may result, however, in wasted transmissions (and therefore wasted power, wasted bandwidth, etc.) in situations where the other device(s) in the group may not be actively communicating data over the Bluetooth connection (e.g., when the other device(s) are in a low energy, low power, or inactive state). In such cases, the listening device would be configured with a faster ISO interval (e.g., 7.5 ms) than its audio stream is arriving (e.g., 10 ms).

Using a keyboard as an example of a device that is connected in the same Bluetooth group as a hearing aid, for example, the keyboard may switch to a low energy/power mode when the user of the keyboard has not actively typed on the keyboard for some time. In such cases, the keyboard may have a reduced data communication demand when in low energy/power mode (e.g., because there are no new keypresses that need to be transmitted from the keyboard to the host computer). As a result of the lower data communication demands, the keyboard would not need to communicate at the faster connection interval (e.g., 7.5 ms). Nevertheless, because the isochronous interval for the listening device in the same group is also at the faster ISO interval, the listening device may be sending data packets more frequently than is necessary, considering the interval at which the audio stream is being provided and the current state of the other devices in the group. This may add an extra 5 bytes of data in order for the host to transmit to the listening device at a 7.5 ms interval. As result, there may be a significant amount of unnecessary power consumption by both the listening device and the host device.

The disclosed automatic mode switching, discussed in more detail below, automatically switches the communication mode dynamically between a framed communication mode (e.g., at a first ISO interval) and an unframed communication mode (e.g., at a second ISO interval) based on whether there are other device(s) in the same group as the listening device and based on the current state of operation of those other device(s) (e.g., whether the other device(s), such as a Bluetooth-connected keyboard and/or mouse, are in an idle state). By automatically switching to an unframed communication mode (with, e.g., a slower ISO interval) when other devices in the group are idle, the automatic switching may provide significant power savings for the listening device (e.g., especially for a listening device that operates from a small battery, such as a hearing aid running on a coin-cell battery) as well as the for the host (e.g., the computer/laptop).

Current methods for streaming audio over a Bluetooth LE connection to a listening device may result in inefficient communication when the other connected devices in the group are in an inactive state, idle state, or low-power mode. One way the listening device may switch to using the more efficient unframed mode (where the ISO interval matches the interval at which SDU frames are received), is to disconnect from the group and reestablish a new connection for the listening device so that the communication parameters may use unframed mode. However, this type of disconnecting and reconnected may be time consuming, meaning that the audio stream may need to be paused while the new connection is established. This may result in audio glitches (such as delayed or lost audio) during the disconnecting and reconnecting, and ultimately, this may lead to a bad user experience with respect to the streaming audio.

The automatic mode switching method disclosed herein may reduce these problems and inefficiencies by dynamically adjusting the frame interval (e.g., from an unsegmented framed mode to an unframed mode) based on an activity status of the devices in the group, without disconnecting/reconnecting the group of devices. If the other devices in the group are operating in a low power mode, inactive state, or idle state, a longer connection interval may be used (and, e.g., the listening device set to unframed mode). If the other devices in the group are in a normal, active, or non-idle state, the frame interval may be switched back to the shorter connection interval (and, e.g., the listening device set to unsegmented framed mode). In this manner, power is not wasted to communicate at an interval that is faster than necessary for communicating the audio stream to the listening device, and audio glitches are not caused by disconnected/reconnecting the group of devices.

Using a typical computer/laptop as an example, when additional Bluetooth-connected devices such as a keyboard/mouse are connected or disconnected from a computer while the listening device is streaming audio over Bluetooth (e.g., during an audio call streamed to a Bluetooth-connected hearing aid), conventional methods may pause the audio, disconnect the connected isochronous stream (CIS) devices associated with the group (CIG), and reestablish connections with a new set of CIG parameters for the framed/unframed communication mode and corresponding ISO interval of 10 ms/7.5 ms. As noted above, disconnecting and reestablishing may take some time and may therefore result in audio glitches (such as delayed or lost audio) and ultimately a bad user experience.

By contrast, automatic mode switching of the audio streaming mode between unsegmented framed mode (e.g., at a faster ISO interval) and unframed mode (e.g., at a slower ISO interval) based on the presence and/or state of other Bluetooth-connected devices (e.g., such as a mouse or keyboard) in the group may provide a seamless way of taking advantage of the idle state of other devices in the group to reduce the power consumption of the streaming audio connection.

For example, when a Bluetooth-connected keyboard or mouse enters into a low power mode (e.g., is not actively in use), the source device (e.g., to which the listening device is also connected) may request a communication mode switch that will switch the audio streaming mode from unsegmented framed communication mode to unframed communication mode. Similarly, when the Bluetooth-connected keyboard or mouse is connected or disconnected, the audio streaming mode may dynamically switch between unsegmented framed communication mode and unframed communication mode. This automatic mode switching may allow the listening device (such as a hearing aid device that may have a small form factor, is expected to operate from a battery for a long time, and is therefore cautious about power consumption) to save power and thus improve battery life. This automatic mode switching may also reduce power consumption of the host/source computer and may improve its battery life, which may be particularly helpful, for example, if the computer is a battery-powered laptop. This automatic mode switching may also provide an improved audio experience, where there may not need to be a lengthy process for pausing the audio, disconnecting all the connected isochronous stream (CIS) devices associated with the group (CIG), and reestablishing the connections with new set of CIG parameters for the framed/unframed communication mode and the corresponding ISO interval of 10 ms/7.5 ms.

The disclosed automatic mode switching may be implemented as follows. When no other Bluetooth-connected devices are connected to a host (e.g., the audio source such as a computer, laptop, smartphone, etc.), the audio stream configuration for the Bluetooth-connected listening device (e.g., a hearing aid) may use unframed mode for the communication connection. In unframed mode, audio SDU frames are received at a 10 ms interval and are transmitted over the communication connection to the listening device at an ISO interval of 10 ms. If an additional Bluetooth device is connected (e.g. a keyboard or mouse) to the group (e.g., a shared communication connection), the audio stream configuration may switch to unsegmented framed mode. In unsegmented framed mode, the SDU frames are received at 10 ms interval and are transmitted over communication connection to the listening device at an ISO interval of 7.5 ms without segmentation.

The disclosed automatic mode switching may utilize two modes that define the communication connection and in particular, the interval of audio communication as between the listening device and the source (e.g., the host device from which the audio is being sourced and to which the listening device has a Bluetooth connection). The audio communication configuration may switch between the two modes (e.g., between mode 1 and mode 2), depending on whether another device is connected and its state of operation:

| **Mode** | **ISO interval** | **SDU interval** | **Framed?** | **Unsegmented?** |
|---|---|---|---|---|
| Mode 1 | 10 ms | 10 ms | No | No |
| Mode 2 | 7.5 ms | 10 ms | Yes | Yes |

As should be understood, the two modes are merely exemplary, and other modes may be defined that include different combinations of ISO intervals, SDU intervals, and whether the communication is framed/unframed or unsegmented/not unsegmented.

When there are no other Bluetooth-connected devices in the group, the host may transmit the audio stream to the listening device using mode 1 (e.g., unframed mode, where the audio stream has a 10 ms SDU frame duration and the data packets are transmitted at a 10 ms ISO interval). Thus, the music or voice audio frames are sent to the listening device in unframed mode unless or until an additional Bluetooth device in the group is connected. While the audio is still streaming, the transfer of audio data packets to the listening device is able to switch dynamically and automatically to mode 2 (e.g., unsegmented, framed mode, where 10 ms SDU frames are sent over 7.5 ms ISO interval) if an additional device is connected.

To indicate this automatic mode switching, the system may use reserved bit(s) in a CIS data header of a protocol data unit (PDU) (e.g., the RFU bit). For example, the source may set the reserved bit to 0x01, which may indicate a mode switch between unframed mode (mode 1) and framed mode (mode 2) for the next ISO interval. If communication with the listening device is currently in unframed mode (mode 1), a reserved bit of 0x01 in the CIS data header of the PDU may indicate a switch to framed mode (mode 2) for the next ISO interval. If communication with the listening device is currently in framed mode (mode 2), setting the reserved bit to 0x01 may indicate a switch to unframed mode (mode 1) for the next interval. If the reserved bit is 0x00, this may indicate no mode switch, and the mode for the next interval may stay the same as the current mode.

The disclosed automatic mode switching may also consider the state of the other Bluetooth-connected devices (e.g., that are in the same communication group) to determine whether to switch modes. For example, when user activity on a Bluetooth-connected keyboard or mouse is in a standby state, low-power state, or idle state (e.g., the keyboard or mouse connection enters a low power mode (e.g., based on sniff sub rate in the case of a classic Bluetooth connection or connection sub rating in the case of a LE Bluetooth connection)), the host/source may, for the audio streaming connection to the listing device, initiate a mode switch from mode 2 to mode 1 for the next frame. Once there is an indication of user activity on the Bluetooth-connected keyboard or mouse, the host/source may initiate a mode switch from mode 1 back to mode 2. Because the switching is dynamic, there is no need to pause the audio, disconnect, and reestablish connection(s) in order to change the ISO interval.

The disclosed automatic mode switching may also determine whether to switch modes based on whether the listening device provides an acknowledgement (e.g., an ACK). If the host/source device receives a non-acknowledgement (e.g., a NAK) or does not receive an access code detection from the listening device in response to the indication of the mode switch request (e.g., a mode-switch indicator in the RFU of the header of the CIS data PDU) that was sent from the host/source, the host/source may continue to send the mode-switch indicator as part of the CIS procedure until the acknowledgement is received or until the mode-switch indicator changes due to new conditions at the time of (re)sending the CIS data PDU.

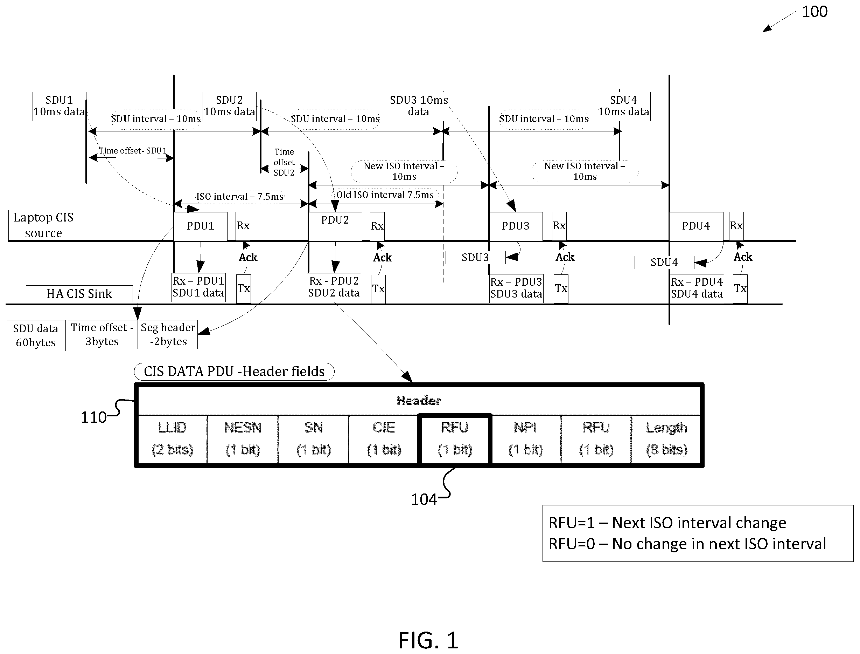

FIG. 1 shows an exemplary flow diagram 100 of SDU and PDU as between a source device (e.g., a computer/laptop from which audio is being streamed and to which Bluetooth devices are connected) and a listening device (e.g., a hearing aid (HA)). As shown in the top row, the SDU arrives at 10 ms intervals, where SDU2 arrives 10 ms after SDU 1, SDU3 arrives 10 ms after SDU2, and SDU4 arrives 10 ms after SDU 3. At the time of transmitting SDU1, assume that another Bluetooth device is part of the group and active, so the ISO interval is 7.5 ms. Thus, the ISO interval of the PDU for the streaming audio is also at 7.5 ms, as shown between PDU2 and PDU1. However, at the time of transmitting SDU2 from the source device, assume that the Bluetooth-connected keyboard or mouse goes to low power mode. As such, the source device may indicate a mode switch to unframed mode for the next SDU (i.e., SDU 3). The indication of a mode switch may be provided in a header field of the next PDU (i.e., in this example, the PDU associated with SDU2, or PDU2, because this is when the other device went to low-power mode). An example header field 110 is shown in FIG. 1, where a reserved bit 104 (RFU) may be used to indicate the mode switch (e.g., setting the reserved bit 104 to 0x01). As should be appreciated, other header formats may be used and other bits may be used to indicate the mode switch. For example, while this example uses a toggle bit as an indication that the mode is to switch for the next frame (e.g., to toggle between two modes), other indications may be used, such as providing a bit code that corresponds to a unique one of a set of possible modes (e.g., 0x00 indicates mode 1 while 0x01 indicates mode 2) to be used for the next frame.

At the hearing aid, the PDU2 may be received (in FIG. 1: Rx-PDU2 of SDU2 data) and may acknowledge its receipt and its agreement to switch modes by transmitting an "ACK". Then, the next SDU (SDU3) may be transmitted in PDU3 at the new ISO interval of 10 ms and using the new communication mode (mode 1, referencing the table above) for the next frame, which is longer than the old ISO interval of 7.5 ms using the old communication mode (mode 2, referencing the table above). Mode 1 communication may continue while the Bluetooth-connected keyboard or mouse remains in low-power mode. Once the Bluetooth-connected keyboard or mouse exits low-power mode, the source device may again indicate a mode switch by setting the reserved bit 104 (RFU) to one (0x01) in order to cause the mode to switch back to the old ISO interval of 7.5 ms (mode 2) for the next frame.

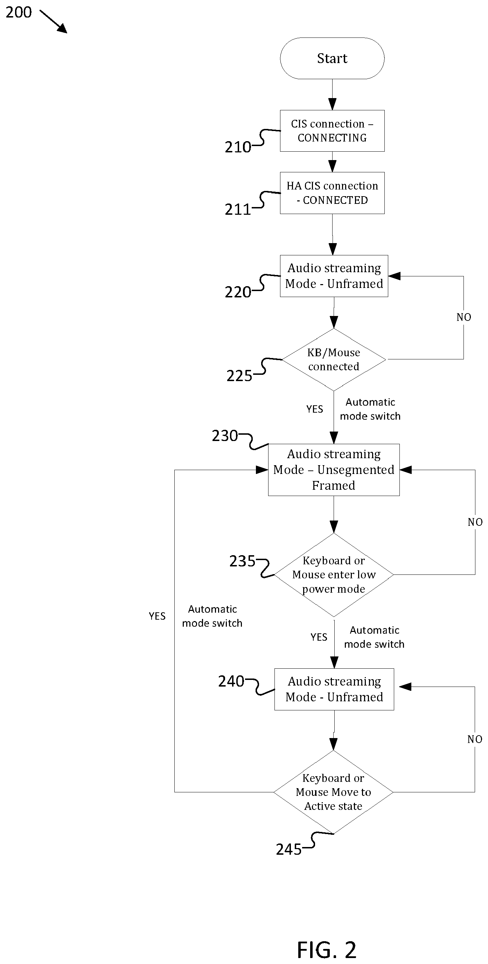

FIG. 2 shows an example flow chart 200 of a listening device's audio connection establishment and mode switching based on the change of state of another Bluetooth-connected device. The listening device (in this example, a hearing aid "HA") may establish, at 210 and 211, a communication connection (a CIS connection) with a host device from which audio will be streamed over the connection to the HA. The audio stream may be transmitted, at 220, over the communication connection using unframed mode.

Next, at 225, the host may monitor whether another device (in this example, a Bluetooth keyboard and/or mouse "KB/mouse") is connected as another Bluetooth device in the group. If no KB/mouse is detected, the audio stream may continue, at 220, to be transmitted over the communication connection using unframed mode. If a KB/mouse is detected, the mode may be automatically changed to stream the audio, at 230, to the HA in an unsegmented, framed mode. Next, at 235, the host may monitor the operational status of the KB/mouse (e.g., whether the KB/mouse enters a low-power mode). If the KB/mouse has not entered a low power mode, the audio stream may continue, at 230, to be transmitted over the communication connection using framed, unsegmented mode. If the KM/mouse has entered a low power mode, the mode may be automatically changed to stream the audio, at 240, to the HA in an unframed mode. Next, at 245, the host may monitor whether the operational status of the KB/mouse changes (e.g., whether the KB/mouse moves so as to exit low-power mode and be in an active state). If the KB/mouse remains in an inactive state, the audio stream may continue, at 240, to be transmitted over the communication connection using unframed mode. If the KM/mouse has entered an active state, the mode may be automatically changed to stream the audio, at 230, to the HA in an unsegmented, framed mode.

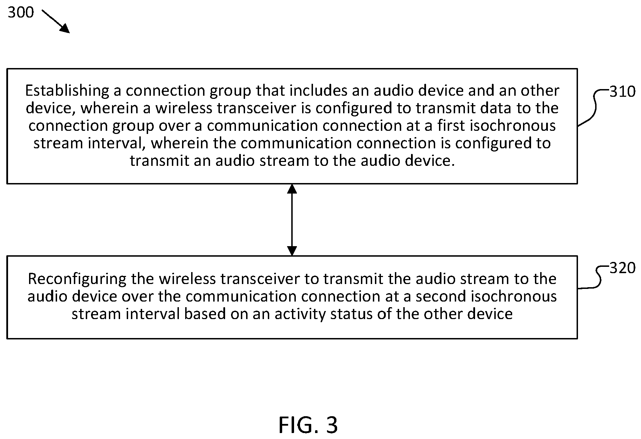

FIG. 3 depicts a schematic flow diagram of a method 300 for automatically switching a mode of the isochronous adaptation layer. Method 300 may implement any of the features of the automatic switching discussed above, including with respect to FIGs. 1-2.

Method 300 includes, at 310, establishing a connection group that includes an audio device and an other device, wherein a wireless transceiver is configured to transmit data to the connection group over a communication connection at a first isochronous stream interval, wherein the communication connection is configured to transmit an audio stream to the audio device. Method 300 also includes, at 320, reconfiguring the wireless transceiver to transmit the audio stream to the audio device over the communication connection at a second isochronous stream interval based on an activity status of the other device.

In the following, various examples are provided that may include one or more features of the automatic switching described above, including with reference to FIGs. 1-3 above. It may be intended that aspects described in relation to the devices may apply also to the described method(s), and vice versa.

While the disclosure has been particularly shown and described with reference to specific aspects, it should be understood by those skilled in the art that various changes in form and detail may be made therein without departing from the scope of the disclosure as defined by the appended claims. The scope of the disclosure is thus indicated by the appended claims.

## Claims

1. An apparatus comprising:
a wireless transceiver configurable to communicate with external devices using a Bluetooth low-energy connection; and
a communication controller configured to:
establish via the wireless transceiver a connection group that includes a listening device and an other device, wherein the listening device and the other device are external devices, wherein the listening device is an audio device configured for audio streaming, and the other device other than the listening device is not used for audio streaming, and the connection group is a connected isochronous group, CIG; wherein the wireless transceiver is configured to transmit data packets to the connection group using a communication connection in a data packet mode;
monitor an activity status of the other device within the connection group;
determine a reconfiguration of the communication connection based on the activity status of the other device within the connection group, wherein the reconfiguration comprises changing the data packet mode of the communication connection to a second data packet mode; and
cause the wireless transceiver to transmit the data packets over the communication connection in the second data packet mode.

2. The apparatus of claim 1, wherein the connection group comprises a Bluetooth low energy isochronous group, wherein the communication connection comprises an isochronous adaptation layer.

3. The apparatus of either of claims 1 or 2, wherein the data packet mode comprises a framed mode and the second data packet mode comprises an unframed mode, wherein preferably the framed mode comprises data packet transmissions that occur at a first isochronous interval without segmentation, wherein preferably the unframed mode comprises data packet transmissions that occur at a second isochronous interval, wherein the first isochronous interval is different from the second isochronous interval.

4. The apparatus of any of claims 1 to 3, wherein the reconfiguration comprises changing an isochronous stream interval between a first isochronous interval and a second isochronous interval, wherein preferably the first isochronous interval comprises 7.5 ms and the second isochronous interval comprises 10 ms.

5. The apparatus of any of claims 1 to 4, wherein the activity status of the other device comprises whether the other device is in an idle mode, whether the other device is in a low-power mode, or whether the other device is scheduled for communicating data packets over the communication connection.

6. The apparatus of any of claims 1 to 5, wherein the communication controller is configured to wait to cause the wireless transceiver to transmit the data packets over the communication connection in the second data packet mode until after an acknowledgement is received from the listening device.

7. The apparatus of any of claims 1 to 6, wherein the data packets comprise streaming audio data packets.

8. The apparatus of any of claims 1 to 7, wherein the listening device comprises a hearing aid, a headset, or a speaker.

9. The apparatus of any of claims 1 to 8, wherein the other device comprises a wireless mouse, a wireless keyboard, or other wireless peripheral device.

10. The apparatus of any of claims 1 to 9, wherein the data packets comprise audio data packets that have been encapsulated into a protocol data unit, PDU, wherein each of the audio data packets comprise a service data unit, SDU, of streaming audio data.

11. The apparatus of any of claims 1 to 10, wherein the communication controller configured to cause the wireless transceiver to transmit the data packets over the communication connection in the second data packet mode comprises the communication controller configured to transmit a mode switch indicator (104) to the wireless transceiver to change the communication connection from the first data packet mode to the second data packet mode.

12. The apparatus of claim 11, wherein each packet of the data packets comprises a header and a payload, wherein the header comprises the mode switch indicator.

13. The apparatus of claim 12, wherein the mode switch indicator of one packet of the data packets is configured to indicate the reconfiguration for a subsequent packet of the data packets.

14. A non-transitory computer-readable medium comprising instructions that, when executed, cause one or more processors to:
establish (310) a connection group that includes an audio device and an other device, wherein the audio device is configured for audio streaming, and the other device other than the audio device is not used for audio streaming, wherein the connection group is a connected isochronous group, CIG, wherein a wireless transceiver is configured to transmit data to the connection group over a communication connection at a first isochronous stream interval, wherein the communication connection is configured to transmit an audio stream to the audio device;
monitor an activity status of the other device within the connection group; and
reconfigure (320) the wireless transceiver to transmit the audio stream to the audio device over the communication connection at a second isochronous stream interval based on an activity status of the other device.

15. The non-transitory computer-readable medium of claim 14, wherein the first isochronous stream interval is associated with a framed, unsegmented mode for transmitting data to the other device; wherein the second isochronous stream interval is associated with an unframed mode for transmitting the packet data units of the audio stream over the communication connection.

## Patentansprüche

1. Vorrichtung, die Folgendes umfasst:
einen drahtlosen Sender-Empfänger, der konfiguriert werden kann, um mit externen Geräten unter Verwendung einer Bluetooth Low Energy-Verbindung zu kommunizieren; und
eine Kommunikationssteuerung, die für Folgendes ausgebildet ist:
Herstellen, über den drahtlosen Sender-Empfänger, einer Verbindungsgruppe, die ein Abhörgerät und ein anderes Gerät aufweist, wobei das Abhörgerät und das andere Gerät externe Geräte sind, wobei das Abhörgerät ein für Audio-Streaming ausgebildetes Audiogerät ist und das andere Gerät, das nicht das Abhörgerät ist, nicht für Audio-Streaming verwendet wird, und wobei die Verbindungsgruppe eine verbundene isochrone Gruppe (CIG) ist; wobei der drahtlose Sender-Empfänger dazu ausgebildet ist, Datenpakete unter Verwendung einer Kommunikationsverbindung im Datenpaketmodus an die Verbindungsgruppe zu übertragen;
Überwachen eines Aktivitätsstatus des anderen Geräts innerhalb der Verbindungsgruppe;
Bestimmen einer Rekonfiguration der Kommunikationsverbindung basierend auf dem Aktivitätsstatus des anderen Geräts innerhalb der Verbindungsgruppe, wobei die Rekonfiguration das Ändern des Datenpaketmodus der Kommunikationsverbindung in einen zweiten Datenpaketmodus umfasst; und
Veranlassen des drahtlosen Sender-Empfängers, die Datenpakete über die Kommunikationsverbindung im zweiten Datenpaketmodus zu übertragen.

2. Vorrichtung nach Anspruch 1, wobei die Verbindungsgruppe eine isochrone Bluetooth Low Energy-Gruppe umfasst, wobei die Kommunikationsverbindung eine isochrone Anpassungsschicht umfasst.

3. Vorrichtung nach einem der Ansprüche 1 oder 2, wobei der Datenpaketmodus einen gerahmten Modus umfasst und der zweite Datenpaketmodus einen ungerahmten Modus umfasst, wobei vorzugsweise der gerahmte Modus Datenpaket-Übertragungsvorgänge umfasst, die in einem ersten isochronen Intervall ohne Segmentierung auftreten, wobei vorzugsweise der ungerahmte Modus Datenpaket-Übertragungsvorgänge umfasst, die in einem zweiten isochronen Intervall auftreten, wobei sich das erste isochrone Intervall von dem zweiten isochronen Intervall unterscheidet.

4. Vorrichtung nach einem der Ansprüche 1 bis 3, wobei die Rekonfiguration das Ändern eines isochronen Stream-Intervalls zwischen einem ersten isochronen Intervall und einem zweiten isochronen Intervall umfasst, wobei vorzugsweise das erste isochrone Intervall 7,5 ms umfasst und das zweite isochrone Intervall 10 ms umfasst.

5. Vorrichtung nach einem der Ansprüche 1 bis 4, wobei der Aktivitätsstatus des anderen Geräts umfasst, ob sich das andere Gerät in einem Ruhemodus befindet, ob sich das andere Gerät in einem Energiesparmodus befindet oder ob das andere Gerät zum Übermitteln von Datenpaketen über die Kommunikationsverbindung geplant ist.

6. Vorrichtung nach einem der Ansprüche 1 bis 5, wobei die Kommunikationssteuerung dazu ausgebildet ist, zu warten, um den drahtlosen Sender-Empfänger zu veranlassen, die Datenpakete über die Kommunikationsverbindung in dem zweiten Datenpaketmodus zu übertragen, bis eine Bestätigung vom Abhörgerät empfangen wurde.

7. Vorrichtung nach einem der Ansprüche 1 bis 6, wobei die Datenpakete Streaming-Audio-Datenpakete umfassen.

8. Vorrichtung nach einem der Ansprüche 1 bis 7, wobei das Abhörgerät ein Hörgerät, ein Headset oder einen Lautsprecher umfasst.

9. Vorrichtung nach einem der Ansprüche 1 bis 8, wobei das andere Gerät eine drahtlose Maus, eine drahtlose Tastatur oder ein anderes drahtloses Peripheriegerät umfasst.

10. Vorrichtung nach einem der Ansprüche 1 bis 9, wobei die Datenpakete Audio-Datenpakete umfassen, die in eine Protokolldateneinheit (PDU) eingekapselt wurden, wobei jedes der Audio-Datenpakete eine Dienstdateneinheit (SDU) zum Streamen von Audiodaten umfasst.

11. Vorrichtung nach einem der Ansprüche 1 bis 10, wobei die Kommunikationssteuerung, die dazu ausgebildet ist, den drahtlosen Sender-Empfänger zu veranlassen, die Datenpakete über die Kommunikationsverbindung in dem zweiten Datenpaketmodus zu übertragen, die Kommunikationssteuerung umfasst, die dazu ausgebildet ist, eine Modusumschaltanzeige (104) an den drahtlosen Sender-Empfänger zu übertragen, um die Kommunikationsverbindung von dem ersten Datenpaketmodus in den zweiten Datenpaketmodus zu ändern.

12. Vorrichtung nach Anspruch 11, wobei jedes Paket der Datenpakete einen Header und eine Nutzlast umfasst, wobei der Header die Modusumschaltanzeige umfasst.

13. Vorrichtung nach Anspruch 12, wobei die Modusumschaltanzeige eines Pakets der Datenpakete dazu ausgebildet ist, die Rekonfiguration für ein nachfolgendes Paket der Datenpakete anzugeben.

14. Nichtflüchtiges computerlesbares Medium, das Anweisungen umfasst, die, wenn sie ausgeführt werden, einen oder mehrere Prozessoren zu Folgendem veranlassen:
Herstellen (310) einer Verbindungsgruppe, die ein Audiogerät und ein anderes Gerät aufweist, wobei das Audiogerät für Audio-Streaming ausgebildet ist, und das andere Gerät als das Audiogerät nicht für Audio-Streaming verwendet wird, wobei die Verbindungsgruppe eine verbundene isochrone Gruppe (CIG) ist, wobei ein drahtloser Sender-Empfänger dazu ausgebildet ist, Daten über eine Kommunikationsverbindung in einem ersten isochronen Stream-Intervall an die Verbindungsgruppe zu übertragen, wobei die Kommunikationsverbindung dazu ausgebildet ist, einen Audio-Stream an das Audiogerät zu übertragen;
Überwachen eines Aktivitätsstatus des anderen Geräts innerhalb der Verbindungsgruppe; und
Rekonfigurieren (320) des drahtlosen Sender-Empfängers, um den Audio-Stream über die Kommunikationsverbindung zu dem Audiogerät in einem zweiten isochronen Stream-Intervall basierend auf einem Aktivitätsstatus des anderen Geräts zu übertragen.

15. Nichtflüchtiges computerlesbares Medium nach Anspruch 14, wobei das erste isochrone Stream-Intervall mit einem gerahmten, nicht segmentierten Modus zum Übertragen von Daten an das andere Gerät verbunden ist; wobei das zweite isochrone Stream-Intervall mit einem nicht gerahmten Modus zum Übertragen der Paketdateneinheiten des Audio-Streams über die Kommunikationsverbindung verbunden ist.

## Revendications

1. Appareil comprenant :
un émetteur-récepteur sans fil configurable pour communiquer avec des dispositifs externes à l'aide d'une connexion Bluetooth à basse énergie ; et
un contrôleur de communication configuré pour :
établir via l'émetteur-récepteur sans fil un groupe de connexion qui comprend un dispositif d'écoute et un autre dispositif, le dispositif d'écoute et l'autre dispositif étant des dispositifs externes, le dispositif d'écoute étant un dispositif audio configuré pour la diffusion audio en flux, et l'autre dispositif autre que le dispositif d'écoute n'étant pas utilisé pour la diffusion audio en flux, et le groupe de connexion étant un groupe isochrone connecté, CIG ; l'émetteur-récepteur sans fil étant configuré pour transmettre des paquets de données au groupe de connexion à l'aide d'une connexion de communication en mode paquet de données ;
surveiller un état d'activité de l'autre dispositif au sein du groupe de connexion ;
déterminer une reconfiguration de la connexion de communication sur la base de l'état d'activité de l'autre dispositif au sein du groupe de connexion, la reconfiguration comprenant le passage du mode paquet de données de la connexion de communication à un second mode paquet de données ; et
amener l'émetteur-récepteur sans fil à transmettre les paquets de données sur la connexion de communication dans le second mode paquet de données.

2. Appareil selon la revendication 1, dans lequel le groupe de connexion comprend un groupe isochrone Bluetooth à basse énergie, dans lequel la connexion de communication comprend une couche d'adaptation isochrone.

3. Appareil selon l'une ou l'autre des revendications 1 et 2, dans lequel le mode paquet de données comprend un mode tramé et le second mode paquet de données comprend un mode non tramé, dans lequel, de préférence, le mode tramé comprend des transmissions de paquets de données qui se produisent à un premier intervalle isochrone sans segmentation, dans lequel, de préférence, le mode non tramé comprend des transmissions de paquets de données qui se produisent à un second intervalle isochrone, le premier intervalle isochrone étant différent du second intervalle isochrone.

4. Appareil selon l'une quelconque des revendications 1 à 3, dans lequel la reconfiguration comprend la modification d'un intervalle de flux isochrone entre un premier intervalle isochrone et un second intervalle isochrone, dans lequel, de préférence, le premier intervalle isochrone comprend 7,5 ms et le second intervalle isochrone comprend 10 ms.

5. Appareil selon l'une quelconque des revendications 1 à 4, dans lequel l'état d'activité de l'autre dispositif comprend le fait que l'autre dispositif est ou non dans un mode de veille, le fait que l'autre dispositif est ou non dans un mode basse puissance, ou le fait que l'autre dispositif est ou non programmé pour communiquer des paquets de données sur la connexion de communication.

6. Appareil selon l'une quelconque des revendications 1 à 5, dans lequel le contrôleur de communication est configuré pour attendre, avant d'amener l'émetteur-récepteur sans fil à transmettre les paquets de données sur la connexion de communication dans le second mode paquet de données, la réception d'un accusé de réception en provenance du dispositif d'écoute.

7. Appareil selon l'une quelconque des revendications 1 à 6, dans lequel les paquets de données comprennent des paquets de données audio diffusées en flux.

8. Appareil selon l'une quelconque des revendications 1 à 7, dans lequel le dispositif d'écoute comprend une prothèse auditive, un casque ou un haut-parleur.

9. Appareil selon l'une quelconque des revendications 1 à 8, dans lequel l'autre dispositif comprend une souris sans fil, un clavier sans fil ou un autre dispositif périphérique sans fil.

10. Appareil selon l'une quelconque des revendications 1 à 9, dans lequel les paquets de données comprennent des paquets de données audio qui ont été encapsulés dans une unité de données de protocole, PDU, chacun des paquets de données audio comprenant une unité de données de service, SDU, de données audio diffusées en flux.

11. Appareil selon l'une quelconque des revendications 1 à 10, dans lequel le contrôleur de communication configuré pour amener l'émetteur-récepteur sans fil à transmettre les paquets de données sur la connexion de communication dans le second mode paquet de données comprend le contrôleur de communication configuré pour transmettre un indicateur de changement de mode (104) à l'émetteur-récepteur sans fil pour faire passer la connexion de communication du premier mode paquet de données au second mode paquet de données.

12. Appareil selon la revendication 11, dans lequel chaque paquet des paquets de données comprend un en-tête et une charge utile, l'en-tête comprenant l'indicateur de changement de mode.

13. Appareil selon la revendication 12, dans lequel l'indicateur de changement de mode d'un paquet des paquets de données est configuré pour indiquer la reconfiguration pour un paquet suivant des paquets de données.

14. Support non transitoire lisible par ordinateur, comprenant des instructions qui, lorsqu'elles sont exécutées, amènent un ou plusieurs processeurs à :
établir (310) un groupe de connexion qui comprend un dispositif audio et un autre dispositif, le dispositif audio étant configuré pour une diffusion audio en flux, et l'autre dispositif autre que le dispositif audio n'étant pas utilisé pour la diffusion audio en flux, le groupe de connexion étant un groupe isochrone connecté, CIG, un émetteur-récepteur sans fil étant configuré pour transmettre des données au groupe de connexion sur une connexion de communication à un premier intervalle de flux isochrone, la connexion de communication étant configurée pour transmettre un flux audio au dispositif audio ;
surveiller un état d'activité de l'autre dispositif au sein du groupe de connexion ; et
reconfigurer (320) l'émetteur-récepteur sans fil pour transmettre le flux audio au dispositif audio sur la connexion de communication à un second intervalle de flux isochrone sur la base d'un état d'activité de l'autre dispositif.

15. Support non transitoire lisible par ordinateur selon la revendication 14, dans lequel le premier intervalle de flux isochrone est associé à un mode tramé non segmenté destiné à transmettre des données à l'autre dispositif ; le second intervalle de flux isochrone étant associé à un mode non tramé destiné à transmettre les unités de données de paquets du flux audio sur la connexion de communication.
